## Europäisches Patentamt

## European Patent Office

## Office européen des brevets

(19)

(11) Publication number: **0 078 585**
**B1**

(12)

# EUROPEAN PATENT SPECIFICATION

(51) Int. Cl.⁴: **A 01 C 15/00,** A 01 C 17/00

(45) Date of publication of patent specification: **10.02.88**

(21) Application number: **82201375.1**

(22) Date of filing: **02.11.82**

(54) **Device for spreading granular and/or powdery material.**

(30) Priority: **03.11.81 NL 8104960**
**16.12.81 NL 8105663**

(43) Date of publication of application:
**11.05.83 Bulletin 83/19**

(45) Publication of the grant of the patent:
**10.02.88 Bulletin 88/06**

(84) Designated Contracting States:
**DE FR GB**

(56) References cited:
**DE-A-2 831 222**
**DE-A-2 906 791**
**US-A-3 807 643**
**US-A-4 167 248**

(73) Proprietor: **C. van der Lely N.V.**
**Weverskade 10 P.O. Box 26**
**NL-3155 ZG Maasland (NL)**

(72) Inventor: **Van der Lely, Ary**
**10a Weverskade**
**Maasland (NL)**
Inventor: **Bom, Cornelis Johannes Gerardus**
**16 Laan van Nieuw Rozenburg**
**Rozenburg (NL)**

(74) Representative: **Mulder, Herman et al**
**Octrooibureau Van der Lely N.V. Weverskade 10**
**P.O. Box 26**
**NL-3155 ZG Maasland (NL)**

Courier Press, Leamington Spa, England.

## Description

The invention relates to a device for spreading granular and/or powdery material comprising a hopper for said material, said hopper having a bottom provided with at least one outlet port for delivering the material to at least one distribution member placed underneath said hopper, driving means for driving said distribution member(s) so as to spread said material and an agitator also driven by said driving means, said agitator being located in the hopper near the outlet port and comprising a drivable carrier provided with a disc-shaped member situated in the hopper above the bottom and near the outlet port, an extension movably coupled and mounted to said carrier so as to be swingable relative thereto between an operative position, in which said extension extends from the disc-shaped member outwardly substantially parallel to the bottom so as to pass above the outlet port during its driving by said driving means, and a rest position in which said extension lies also parallel to said bottom but within or near the circumference of said disc-shaped member, the arrangement being such that when said carrier and said agitator are driven by said driving means there is a tendency, aided by the centrifugal force, to hold said extension in the operative position against the weight of the material, whilst when the resistance from the material in the hopper due to its weight exceeds the centrifugal force, it can be moved out of the operative position into its rest position.

A device of this kind is known from DE—A—2.831.222. In this device the extension of the agitator is connected to the upper side of a disc-shaped member of the carrier. Hereby the extension will in its out-off operative position be present on the top side of the disc-shaped member.

The out of operative position of the extension exists when there is much material in the hopper. Hereby on the material around the agitator will be exerted a larger pressure from the material thereabove. Owing hereto the extension being in its out of operative position above the disc-shaped member will still contact the material considerably. This considerably contacting the material will cause a pulverizing and/or sticking of the material. Owing hereto the flowing out of the material from the hopper is disturbed which is of disadvantage for the delivery of the material through the outlet port and thereby for an even spreading of the material. When granular material is to be spread and part of the granulars flowing through the outlet port is pulverized. The pulverized granulars will be thrown out over a smaller distance than the not pulverized granulars. Owing hereto a wished even distribution of the material by the distribution member is influenced disadvantageously. One object of the invention is to reduce the effect of the agitator on the material in the hopper to practically nil when there is a large quantity of material in the hopper and a satisfactory flow out of the material from the hopper through the outlet port.

According to the invention this can be achieved when the extension is mounted to the carrier so as to be located at a lower level than the top side of the disc-shaped member, whereby said extension lies in its rest position, at least nearly against the circumference of the outer periphery of said disc-shaped member or at least nearly completely below the underside of said disc-shaped member and in its operative position lies above the bottom so as to sweep along the bottom, so that the material is prevented from staying at the side of the outlet ports on the bottom.

According to the invention as the extension is exposed to a higher resistance in the material in the hopper it will move to below the disc-shaped member or against the outer circumference of the disc-shaped member. Owing hereto the effect of the extension on the material will be minimized and pulverizing or sticking of the material is practically prevented in the out of operative position of the extension.

According to the invention as the extension is exposed to a lower resistance in the material in the hopper, it will move to a greater or lesser extent into or out of its operative position so as to sweep along the bottom above the bottom. Hereby the material will be delivered to and through the outlet port when there is still a smaller quantity of material in the hopper.

DE—A—2.906.791 shows an agitator with an extension movable at a very small distance above the bottom. However this extension is fixed to its carrier and cannot move out of its operative position, whereas the carrier does not have a disc-shaped member.

An advantageous embodiment of the device according to the invention is obtained, when the extension is pivotable about a pivotal axis with respect to the carrier which pivotal axis is at least nearly parallel to the axis of rotation of the carrier.

For various purposes the effect of the extension can be enhanced when it is resiliently movable with respect to the carrier. In particular the operation of the extension will thus be less sensitive to the speed of rotation of the agitator. In an advantageous construction the extension is made from resilient material.

The material can be delivered to the outlet port very advantageously when the extension comprises an agitator arm in the form of a strip which slopes forwardly and downwardly with respect to the normal direction of rotation of the agitator.

The operation of the agitator is particularly advantageous when the outlet port extends at least partly in an upwardly extending wall of the delivery part of the hopper. In its operative position the extension can effectively push the material through the outlet port.

Fig. 1 is a front view of a device for spreading material embodying the invention.

Fig. 2 is an enlarged vertical sectional view of a delivery part of the hopper.

Fig. 3 is a plan view of the part shown in Fig. 2 taken in the direction of the arrow III in Fig. 2.

Fig. 4 is an enlarged elevational view of the agitator embodying the invention taken in the direction of the arrow IV in Fig. 3.

Fig. 5 is a plan view and a partial horizontal sectional view of the agitator taken in the direction of the arrow V in Fig. 4.

Fig. 6 is a plan view like Fig. 3 of a second embodiment of an agitator in accordance with the invention.

Fig. 7 is a sectional view of the agitator shown in Fig. 6 taken on the line VII—VII in Fig. 6.

Fig. 8 is a sectional view like Fig. 7 of a different embodiment of an agitator in accordance with the invention.

Fig. 9 is a side elevation of a further embodiment of an agitator in accordance with the invention.

Fig. 10 is a side elevation of the agitator of Figs. 1 to 4 used in a hopper having a different outlet port in accordance with the invention.

Fig. 11 is a plan view of a still further embodiment of the device in accordance with the invention.

Fig. 12 is an elevational view of the embodiment of Fig. 11 taken in the direction of the arrow XII in Fig. 11.

Fig. 13 is a vertical sectional view of the embodiment of Fig. 11 taken in the direction of the arrow XIII—XIII in Fig. 11.

Fig. 14 is a plan view of a further embodiment of the device in accordance with the invention.

Fig. 15 is an elevational view of the embodiment of Fig. 14 taken in the direction of the arrow XI in Fig. 14.

Fig. 16 is a plan view of a still further embodiment of an agitator in accordance with the invention.

Fig. 17 is an elevational view of the agitator of Fig. 16 taken in the direction of the arrow XVII in Fig. 16.

Fig. 18 is a plan view of another embodiment of an agitator in accordance with the invention.

Fig. 19 is an elevational view of the agitator of Fig. 18 taken in the direction of the arrow XIX in Fig. 18.

Fig. 20 is a plan view of a further embodiment of the agitator in accordance with the invention.

Fig. 21 is partly a sectional view and partly an elevational view of the agitator of Fig. 20 taken in the direction of the arrow XXI—XXI in Fig. 20.

Fig. 22 is an elevational view of the agitator of Fig. 20 taken on the line XXII—XXII.

Fig. 23 is a plan view of a further embodiment of the agitator in accordance with the invention, an elevational view of which is shown in Fig. 24 taken in the direction of the arrow XXIV in Fig. 23.

Fig. 25 is a plan view of a further embodiment of an extension on the agitator shown in Figs. 23 and 24.

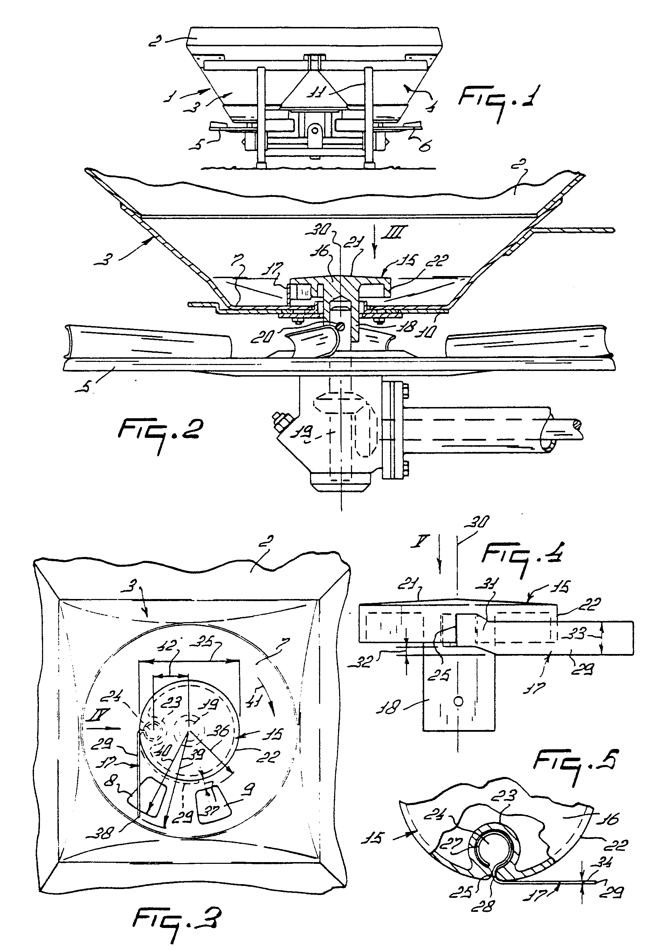

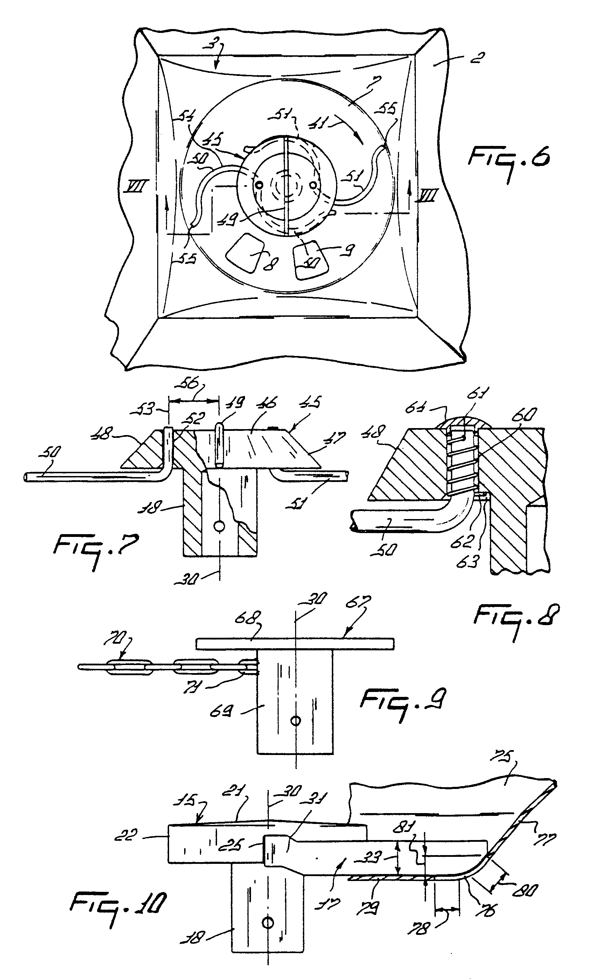

Figure 1 shows a spreading device 1 embodying the invention comprising a hopper 2. The hopper 2 has two delivery parts 3 and 4, beneath which distribution members 5 and 6 are arranged. The bottom of the identical delivery parts 3 and 4, as is shown in Fig. 3 for the bottom 7 of the delivery part 3, have each two outlet ports 8 and 9. Below the bottoms 7 are arranged slides 10 of a dosing mechanism (not shown in detail), by means of which the parts 8 and 9 can be closed to a greater or lesser extent. The device comprises a frame 11, which can be hitched to the lifting device of a tractor or a similar vehicle, whilst the distribution members can be coupled by means of transmission members with the power take-off shaft of the tractor for driving said distribution members, which is not shown in detail.

In each of the delivery parts 3 and 4 an agitator 15 is arranged above the bottom 7 concerned. These agitators are identical to each other and Figs. 2 to 5 only show the agitator 15 in the delivery part 3.

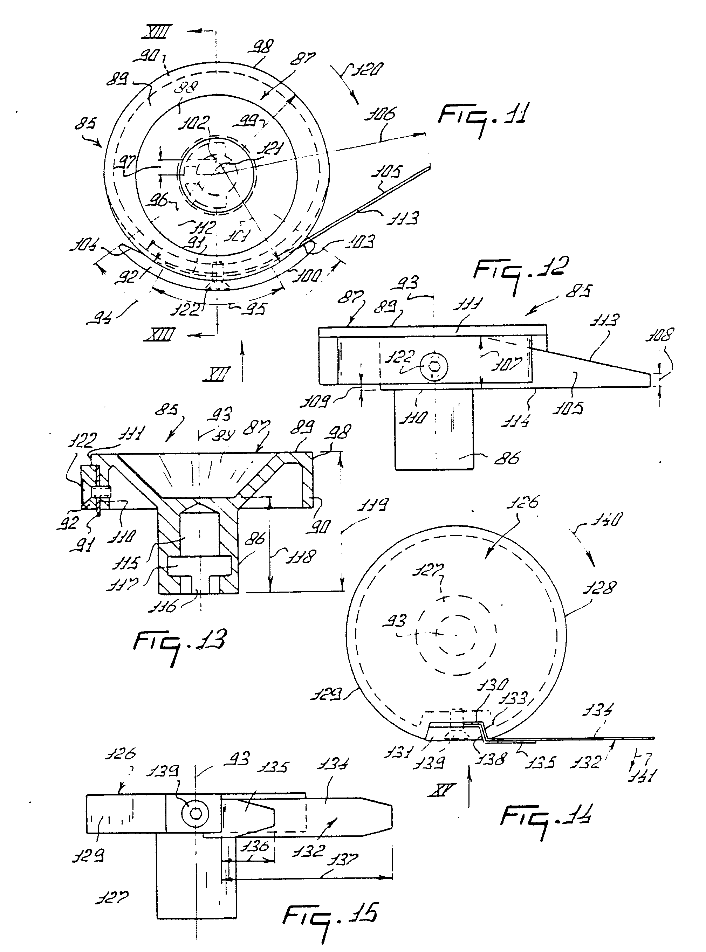

The agitator 15 comprises a carrier 16, to which an extension 17 is, at least substantially, movably mounted. The carrier 16 comprises a sleeve 18 which fits around the shaft 19 of the distribution member and is rigidly secured thereto by means of a pin 20. The agitator 15 furthermore comprises a disc 21 which has a more or less flat top surface and is provided at the periphery with a depending ring 22. The ring 22 has on its inner surface a bulging part 23 in which is provided a recess 24 which is cylindrical in this embodiment. The recess 24 is open towards the underside of the carrier 16 and closed at the top. Between the recess 24 and the periphery of the carrier 16 is provided a slot-shaped gap 25. The gap 25 has the same height as the recess 24. The extension 17 has an annular part 27, which fits in the recess 24 as is illustrated in Fig. 5. The annular part 27 is adjoined by a short, straight part 28 fitting in the slot shaped gap 25. The agitator 17 furthermore comprises an agitator arm portion 29, which is straight viewed on plan and which adjoins the part 28 at an angle of 90°, whilst the part 28 with the slot-shaped gap 25 extends radially with respect to the central axis 30 of the agitator. The axis 30 coincides with the centre line of the delivery part 3 and the round bottom 7. Viewed from the side, the agitator arm portion 29 (Figure 4) has a short, inclined part 31 so that the arm portion 29 is lower than the annular part 27 by a distance 32 of about 8 mms.

In this embodiment the extension 17 is made from resilient strip material, for example spring steel. The width 33 of the material of the extension 17 extends in a vertical direction, the height 33 being appreciably larger than the thickness 34. In this embodiment the height 33 is about 2 cms, whereas the thickness 34 amounts to about 0.75 mm. It will be obvious that the dimensions 32, 33 and 34 may be chosen differently in the same order of magnitude. The underside of the arm portion 29 is located at a distance below the underside of the top disc 21, said distance exceeding only slightly the distance 32. The underside of the annular part 27 is located a small distance of about 22 mms below the underside of the carrier 26 and the height of the recess 24 is slightly smaller than the height 33 of the strip material of the extension 17. The top edge of the annular part 27 is in engagement with the closed top side of the recess 24. The carrier 16 has a diameter 35 of a size such that half the diameter 35 is smaller than the radius 36 of the ports 8 and 9, viewed from the central axis 30. In this embodiment the ports 8 and 9 are concentric with the axis 30. Thus the circumference of the carrier 26 and the ports 8, 9 are spaced apart by a distance 37, which exceeds the thickness 34 of the extension 17.

In the undeformed state of the resilient material of the extension 17 shown in Fig. 3, the end 38 of the extension 17 is spaced apart from the axis 30 by a distance 39, which exceeds the radius 40 of the parts of the ports 8 and 9 furthest from the axis 30. In the undeformed state of the extension the arm portion 29 is tangential to the periphery of the carrier 26, as will be apparent from Fig. 3.

When putting the device into operation it is coupled to a prime mover, for example to the lifting device of a tractor, and the transmission members of the device are coupled to the power take-off shaft of the tractor to drive the distribution members 5 and 6. The distribution members are thus driven so that they rotate in opposite senses, each of the distribution members rotating about a rotary axis coinciding with the central axis of the agitator, for example the axis 30 of the agitator 15 in the delivery part 3. The distribution members 5 and 6 are driven in a manner such that their proximal sides move opposite the direction in which the material is mainly spread. In the embodiment shown the device is coupled by its front side with the lifting device of a tractor or a similar prime mover, so that the proximal sides of the distribution members move forwards with respect to the normal direction of movement of the device. The material is spread by the two distribution members on the same strip of land. Prior to use the material to be spread is loaded into the hopper 2 and during operation the material is fed through the outlet ports of the delivery ports 3 and 4, such as the outlet ports 8 and 9 in part 3, to the distribution members 5 and 6 respectively.

During spreading the agitators in the delivery ports 3 and 4 are rotated with the distribution members 5 and 6, since they are coupled with the shafts of the distribution members concerned. The agitator 15 shown in Figs. 2 to 5, coupled with the distribution member 5, is thus rotated in the direction of the arrow 41. With respect to the direction of rotation 41 the arm 29 of the extension 17 extends to the rear from the region where it adjoins the disc 21 and the part 28 located in the slot-shaped gap 25. During this rotation the extension 17 is exposed to the resistance of the material contained in the hopper. The shape of the extension 17 and the force of the resilient material of said extension 17 are such that, when the hopper is filled to a reasonable extent near the delivery port, the resistance experienced by the extension has a value such that the arm will bend against the spring force of the resilient material of the extension. Thus the arm portion 29 will be urged out of the operative position shown in Fig. 3 against the curved periphery of the carrier 16 and get into a rest position as is shown in broken lines in Fig. 3.

In this rest position the extension will practically not come into contact with the material. From Fig. 3 it will be apparent in particular that the arm portion 29 is then located in the space 37 between the periphery of the carrier 16 and the ports 8, 9. In this position the extension 17 will substantially not affect the flow of material from the hopper towards the ports 8 and 9 and through said ports. Nevertheless owing to the bent state of the arm 29 a force produced therein by the spring tension will be exerted on the material moving along the outer side of the arm 29 in the direction towards the outlet ports 8 and 9. This outwardly directed force is enhanced by the centrifugal force produced by the rotation of the agitator. In particular when the hopper is becoming empty and hence the pressure on the material located near the outlet ports diminishes, the arm portion 29 will move outwardly owing to the outwardly directed forces. Therefore, as the hopper is further evacuated the extension 17 will automatically move into the operative position and get more into contact with the material. Thus, even when the hopper is almost empty the material continues flowing satisfactorily through the outlet ports 8 and 9 at a substantially constant rate until the hopper is empty.

The arm portion 29 of the extension 17 has a length such that in the extended shape indicated by solid lines in Fig. 3 is extended substantially up to the outer circumference of the bottom 7 and will move across the entire area of the outlet ports 8 and 9, since the end 38 is at a distance 39 exceeding the distance 40.

The design shown provides an agitator which becomes mainly effective when required and which gets out of operation in a position of the arm portion 29 at the circumference of the carrier 16, when the effect of the extension is practically unnecessary. The carrier 16 will invariably have the effect of guiding the material from the central part above the bottom 7 towards the outlet ports 8 and 9. Owing to the shape of the extension 17 shown in Fig. 4, the underside of the arm portion 29 is located at a very small distance above the bottom 7. The arm portion 29 is movable parallel to the bottom 7 with respect to the carrier 16. The curvature between the parts 28 and 29 operates, so to speak, like a pivotal axis, which is parallel to the axis 30 and perpendicular to the bottom 7. Thus the arm portion can satisfactorily sweep or scrape along the bottom so that the material is prevented from staying at the side of the ports 8 and 9 on the bottom 7.

The underside of the disc 21 of the carrier 16 is also close to the bottom so that substantially no material will get below the underside of the disc 21. The sleeve 18 of the carrier 16 is located with a given amount of play inside a bore formed by a ring 42 protruding upwards from the bottom 7. The agitator can be readily removed from or mounted in the hopper by respectively removing and inserting the pin 20. In this way the extension 17, which has to be mounted from the underside of the disc 21 into the recess 24, can be readily fitted, removed or replaced as the case may be.

Although in this embodiment the recess 24 is closed at the top, it may, as an alternative, be a continuous bore which is open at the top of the disc 21. Then the gap 25 will also be continuous. The annular part 27 can then be fitted into the bore from the top of the carrier 16. After the annular part 27 is fitted, the bore may, if desired, be closed at the top, for example, by a cap. If there is a risk that the annular part 27 should move upwards out of the bore 24, a pin may be used rather than a cap. By making the extension 17 from resilient material, the annular part 27 can usually be subjected to a stress such that it is clamped tightly in the opening 24 so that there is no risk that in the case of a continuous bore 24 the annular part 27 should move upwards.

Although in this embodiment the carrier 16 is provided with only one extension 17, two or more extensions may be arranged on the carrier in the manner shown for the extension 17. In the presence of two or more extensions their lengths may, if desired, be different and/or their shapes may differ. Their spring forces may furthermore be different so that, for example, one will reach its operative position sooner than the other.

Although in this embodiment the width 33 of the strip material of the arm portion 29 is perpendicular to the bottom, it may as an alternative have a different shape. For example, the arm portion may be in a slightly inclined position over all or part of its length so that from its underside the arm portion slopes upwardly in the direction of the arrow 41. If it is desired in given circumstances, it may be upwardly inclined in a different direction so that the arm portion is in a slightly dipping position.

Owing to the shape of the extension, in which particularly the arm portion 29 has a low mass, the centrifugal force exerted thereon during rotation will be weak. By a suitable choice of the resilient material of the extension this force can be small compared with the tension of the arm portion 29 in the rest position. Therefore, the operation of the extension 17 will be little affected by centrifugal force. The agitator is, therefore, particularly suitable for use in dispensers in which the distribution members and the agitators coupled with them can move with both a high and a low speed of rotation. The effect of the agitator will, nevertheless, be substantially the same independently of the speed of rotation of the distribution members and the agitators.

The construction of the agitator according to the invention ensures a very satisfactory operation. Particularly when the hopper is completely filled, the material will not be pulverized by the agitator and certainly not by the extension. The agitator has furthermore a satisfactory effect when the hopper becomes gradually more empty and/or when the pressure on the material in front of the ports decreases, so that the material can always satisfactorily pass through the ports and the hopper can be satisfactorily emptied.

Although the construction of the agitator embodying the invention can, in general, be satisfactorily employed in many kinds of spreading devices and in particular in fertilizer dispensers, it is particularly advantageous in fertilizer dispensers of the kind shown in Figs. 1 to 5, where the outlet ports are disposed as is shown in the Figures and two distribution members rotating in opposite senses are provided for spreading the material simultaneously on the same strip of land.

Although in this embodiment the arm portion 29 adjoins the periphery of the carrier 16 along a tangential line, the shape of the extension may be different. For example, the arm portion 29 may extend more radially or it may be slightly curved. For example, for reducing the influence of centrifugal force the diameter 35 may be smaller so that the extension will be at a smaller distance 42 from the axis 30 on the carrier 16 in the rest position.

Although in this embodiment the top side of the carrier 16 is smooth, this top side may, as an alternative, have for example one or more ridges extending, for example, in a radial direction or a direction deviating from the radial position. The ridges may be higher or lower as desired and may have a larger or smaller width.

Figs. 6 and 7 show a different embodiment of the agitator. The parts of the device corresponding with those of the first embodiment are designated by the same reference numerals. Like the agitator 15 the agitator 45 shown in Figs. 6 and 7 comprises a carrier 46 having a sleeve by means of which it can be arranged on the shaft of the distribution member 5. Above the sleeve 18 the carrier 46 has a disc-shaped part 47, the periphery 48 of which is upwardly inclined like part of a conical plane. On the top side and along the inclined peripheral side 48 the disc-shaped part 47 has a ridge 49 extending radially on both sides of the rotary axis 30 as is shown in the Figures. In this embodiment the carrier 46 is provided with two extensions 50 and 51, which are located on a lower level than the disc 47 and are each freely rotatable with respect to the carrier 46. For this purpose each of the wire-shaped extensions 50 and 51 has a part 53 bent upwardly and forming a pivotal axis 53 and being rotatably located in a bore 52 of the disc 47. From the parts 53 the extensions 50 extending parallel to the bottom 7 have curved parts 54, which are curved forwardly with respect to the direction of rotation 41 and constitute convex front sides of the extensions. At the end the extensions have parts 55 bent back, which extend in a slightly radial direction in the operative position of the extensions with respect to the axis 30. The pivotal axes 53 of the extensions are each at a distance 56 from the rotary axis 30.

In this embodiment the rotation of the agitator will exert a centrifugal force on the extensions 50 and 51 such that they tend to move to the position indicated in solid lines in Fig. 6. Particularly when the amount of material in the hopper is small the extensions can reach this operative position in order to act upon the material in a manner such that it still flows sufficiently through the ports 8 and 9 so that the hopper can be completely emptied. When the resistance experienced by the extensions in the material during operation is higher, for example when the hopper is completely or well filled, the centrifugal force exerted on the extensions will not be sufficient to retain the extensions in an operative position. In this case owing to the resistance of the material the extensions will turn by their pivotal axes 53 in the bores 52 so that they get into the rest position indicated by broken lines. In this position the extensions get beneath the disc 47 of the carrier 46 so that they are located completely out of the stream of material flowing from top to bottom and will not affect the passage through the outlet ports. Only the centrifugal force acting upon the extensions will exert pressure on the material in the direction towards the outlet ports 8 and 9. Since in this embodiment the centrifugal force only serves to move the extensions 50 and 51 into their operative position, the weight of the extensions, the distance 56 as well as the speed of rotation of the agitator will play an important role. In dependence on the latter two parameters have to be chosen the weight of the extensions as well as the shape of the parts extending beyond the carrier 47, which determine the resistance experienced by the extensions. Particularly in this embodiment the operative position of the extensions of a given agitator depends on the speed of rotation of the agitator. Otherwise the extensions 50 and 51 affect the material in the same way as in the preceding embodiment, whilst their function is the same.

In order to render the effect of the extensions 50 and 51 less dependent on their weight and on the rotary speed of the agitator, the extensions 50 and 51 may be loaded by a spring structure which tends to urge the agitators outwardly. In this manner the outwardly directed force can be maintained independently of the speed of rotation so that the construction may also be employed in dispensers in which the speed of rotation of the distribution member and of the agitator connected herewith can be varied in accordance with circumstances. In the construction in which the extensions are spring-loaded (Figs. 2 to 5) the distribution member(s) may be driven with speeds of less than 300 rev/min or more than 100 rev/min.

Fig. 8 shows a construction in which a helical spring 60 is arranged around the axis 53 of each of the extensions 50 and 51. This helical spring 60 is wound and exerts a force on the extension concerned in a manner such that it tends to hold the extension in the position indicated in Fig. 6 by solid lines. For this purpose one end 61 of the spring is inserted into a recess of the shaft 53, whereas the other end 62 is located in a recess 63 of the disc 47 of the carrier 46. The bore 52, which is open towards the top and which is more spacious in the construction of Fig. 8 than in that of Fig. 7, may, if desired, be closed at the top by a cap 64. In this way material is prevented from getting into the bore 52, since otherwise the spring 60 might lose its effect to a greater or lesser extent. In dependence on the thickness or height of the extension 50 the disc 47 of the carrier 46 will be located at a greater or smaller distance above the bottom 7, the arrangement being such that the extensions 50 and 51 are located only at a slight distance above the bottom. Although in the embodiments of Figs. 6 to 8 the extensions 50 and 51 have a circular section, they may have a different shape, for example, they may rather have the shape of leaves like the extension 17 of the first embodiment.

Fig. 9 shows a different embodiment of an agitator in accordance with the invention. In this embodiment the agitator 67 comprises a carrier with a top disc 68 arranged on the top side of a sleeve 69 corresponding with the sleeve 18. Below the disc 68 the sleeve 69 is provided with an eyelet 71, to which a chain-like extension 70 is movably fastened. In this embodiment the extension 70 tends to move outwardly by centrifugal force. In dependence on the centrifugal force and hence on the speed of rotation and the weight of the chain the resistance experienced in the material can be overcome to a greater or lesser extent to move the chain beyond the circumference of the disc 68. If the resistance to which the chain is exposed in the material is so high that the centrifugal force exerted on the chain is overcome, the chain will get into its rest position beneath the disc 68. Therefore, the agitator 67 shown in Fig. 9 will operate in the same manner as described with reference to the preceding embodiments.

Fig. 10 shows the agitator 15 of the embodiment shown in Figs. 2 to 5 in a delivery part 75 of a hopper, which delivery part 75 corresponds with the delivery part 3. The delivery part 75 has two outlet ports 76, which may be arranged like the ports 8 and 9 around the axis 30. However, the ports 76 are further from the axis 30 and extend into the upwardly extending sidewall 77 of the delivery part 75. The ports 76 are located in a part 78 of the bottom 79, which corresponds with the bottom 7. The ports 76 extend over a distance 80 from the bottom 79 into the sidewall 77. In this embodiment the part 80 extends upwards by a height 81, which is substantially equal to half the width 33 of the arm portion 29 of the extension 17.

In the operative position the extension of the agitator 17 will exert a force on the material directed outwardly away from the axis 30. Thus the material is slightly urged in the direction towards the wall 77. When the arm 29 is in the position indicated by broken lines in Fig. 3, the material will flow away mainly downwardly through the part 78 of the ports 76. However, if a smaller amount of material is present at the outlet ports or if for other reasons the arm 29 meets less resistance in the material, it will again get into the operative position as indicated by solid lines in Fig. 3.

The material contacted by the extension will thus be pushed towards the wall so that the material can be delivered particularly through the part 80 of the outlet port 76. In this way the agitator has an advantageous effect in that even residual material is moved out of the hopper. With regard to the effect of the agitator the opening shown in Fig. 10 is, therefore, particularly suitable in conjunction with the agitator embodying the invention.

Figs. 11 to 13 show an agitator 85 having a hub 86 and a disc 87. The disc 87 has a conical part 88 tapering in downward direction. On the top side of the conical part 88 an annular part 89 is perpendicular to the hub 86 and provided with a depending rim 90. The periphery of the rim 90 is provided with an extension 91 in the form of a resilient strip, for example, of spring steel. The strip 91 is clamped by means of a clamping member 92 and a bolt 93 to the periphery of the rim 90. The clamping member 92 subtends an angle 94 of about 100° at the rotary axis 93 corresponding to the axis 30 of the agitator. The extension 91 is clamped to the periphery of the rim 90 over an angle 95 of about 60°. The curvature of the rim 90 has a radius 96 and a centre 102 spaced apart from the axis 93 by a distance 97. The centre 102 is located on the other side of the axis 93 than that of the extension 91.

The outer circumference 100 of the clamping member 92 has a radius 101 and a centre coinciding with the centre 102. On the inner side the clamping member 92 has identical rims 103 and 104 extending away from the circumference of the rim 90. The extension 91 is formed by the spring material in a manner such that in the operative position shown in Fig. 11 it is in engagement with the rim 103 with a slight or substantially no spring tension. The extension 91 has an agitator arm 105 extending beyond the carrier 87 over a distance 106 from the shaft 93 so that the end of the agitator arm 105 is located near the circumference of the bottom 7. The part of the extension 91 located between the rim 90 and the clamping member 92 has a height 107. Away from the part clamped between the rim 90 and the clamping member 92 the upper edge 113 of the agitator arm 105 is downwardly inclined so that the end of the agitator arm 105 has a height 108 which is approximately equal to one fifth the height 107. The underside 114 of the extension is parallel to the plane of the underside of the rim 90, which is perpendicular to the axis 93. The underside 114 is spaced apart by a distance 109 of, for example, 2 mms from the underside of the rim 90.

The hub 86 has a bore 115 closed at the top and having a bayonet groove having a part 116 parallel to the axis 93 and a part 117 perpendicular to the axis 93. For putting the agitator into use it can be fastened by the hub 86 to a shaft corresponding to the shaft 19, the bayonet grooves 116, 117 co-operating with a pin (not shown in detail) arranged on the shaft. The hub 86 has a height 118 which is smaller than the overall height 119 of the agitator.

Owing to the conical part 88 of the disc 87 the hub 118 can be shorter so that the weight of the agitator can be lower. Moreover, a satisfactory support of the rim 90 carrying the extension 91 is thus obtained.

The extension 91 is arranged between the rim 90 and the clamping bracket 92 in a manner such that it extends to the rear away from the clamping bracket 92 with respect to the normal direction of rotation 120 of the agitator. As is described for the agitator arm 29 in the embodiment shown in Figs. 1 to 5, the agitator arm 105 can be urged against the periphery of the rim 90 in order to obtain a rest position in which it is substantially not in contact with the material. The resistance experienced by the agitator arm 105 in the material located in front of the outlet ports depends on the shape of the agitator arm 105 protruding from the circumference of the disc 87. In order to reduce said resistance the upper edge 113 is downwardly inclined towards the end in this embodiment. In order to ensure a satisfactory scraping or sweeping effect of the extension along the bottom the underside 114 is straight and parallel to the bottom 7 at a small distance from the latter during operation.

In order to avoid accumulation of material near the front end of the clamping member 92 during rotation of the agitator, the outer circumference 100 is substantially located on a circle having a radius 99. The radius 99 has its centre on the axis 93 and the circumference of the rim 90 covers at least 180° remote from the side of the clamping member 92 as will be apparent from Fig. 11. In the case of an agitator rotating in a direction opposite the arrow 120 an extension can be arranged between the clamping member 92 and the rim 90, said extension being located beyond the member 92 on the other side than that shown in Fig. 11. Then the agitator arm 105 will be in contact with the rim 104. If the extension 91 is formed from the spring material in a manner such that the whole extension has its full length when it is not subjected to stress, the extension may be arranged between the bracket 92 and the rim 90 to protrude on either side in a manner such that the top edge 113 is always uppermost. In this case the extension 91 is subjected to spring tension in its location between the clamping member 92 and the circumference of the rim 90. The extension 91 can be retained in a simple manner at the correct place between the clamping member and the rim 90 by a single bolt 93, since the clamping member 92 bears on a collar 111 of the rim 90 (Fig. 13). The bolt 93 extends through a slot 110 in the extension 91 so that the extension is adjustable in a direction of height between the rim 90 and the member 92.

Figs. 14 and 15 show an agitator 126 having a hub 127 and a disc 128. The hub 127 and the disc 128 constitute a carrier 129 on which an extension 132 is arranged. For fastening the extension 132 to the carrier 129 the periphery of the disc 128 has a recess 130 to receive a clamping member 131. The extension 132 comprises an angular portion 133 fitting between the clamping member 131 and the recess 130. The extension 132 furthermore comprises an agitator arm 134, which adjoins the periphery of the disc 128 near the transition to the angular portion 133 in the operative position. The agitator arm 134 has a length 137 such that in the operative position shown in the Figure it is located near the circumference of the bottom 7. The connection of the extension 132 with the disc 128 is reinforced by a support 135 which has an angular portion 133 by the clamping member 131 to the disc 128 with the aid of a bolt 139. Like the extension 117 the extension 132 is made from resilient material, for example, spring steel and in the unstressed state it will be in the operative position shown in Fig. 14. The support 135 is preferably also made from resilient material and extends along a length 136 away from its fastening point which is approximately equal to one third the length 137.

The agitator 126 can be arranged on a driving shaft like the agitator 15 on the shaft 19 or like the agitator 85. The operation of the agitator 126 corresponds with that of the agitator 15. In the case of a high resistance the agitator arm 134 can be urged against the periphery of the disc 128. Together with the agitator arm 134 the support 135 can be bent around the periphery of the disc 128 by the resistance encountered in the material. When the agitator arm 134 is in the operative position shown in Fig. 14 and has to deflect from some obstacle during its rotation in the direction of the arrow 140, it will leap back into the position shown in Fig. 14 after having passed by the obstacle. In order to limit this return movement the support 135 prevents the agitator arm 134 from excessively deflecting in the direction of the arrow 141. In this way excessive bending is avoided in the area where the agitator arm 134 merges with the angular part 133. This is conducive to the lifetime of the extension 132 without the operation being adversely affected. When the agitator has to be employed in a dispenser in which the direction of rotation is opposite the direction of rotation 140 the present embodiment can also be used for the same purpose and in the same manner by arrangeing the extension 132 and the support 135 between the clamping member 131 and the disc 128 in a manner such that they extend to the left rather than to the right as viewed in Fig. 14. For this purpose the clamping member 131 together with the extension 132 and the support 135 can be, so to speak, turned through 180° about the centre line of the fastening bolt 139.

Figs. 16 and 17 show an agitator largely corresponding with the agitator shown in Figs. 6 and 7. The agitator 145 shown in Figs. 16 and 17 comprises a hub 146 and a disc 147. The disc 147 is provided with an extension 148 having a pivotal shaft 149, which is freely rotatable in a recess 150. In this embodiment the extension 148 has an agitator arm 151 in the form of a strip, the broad side of which is parallel to the disc 147. Like the agitator arms 50 and 51 the agitator arm 151 is slightly curved to the front with respect to the normal direction of rotation 152. As in the case of the agitator shown in Figs. 6 and 7 the centrifugal force exerted on the agitator 145 tends to hold the extension 148 in its working position. Owing to its shape the mass of the agitator 151 is larger than, for example, the mass of the agitator arm of the extension 50 so that with the same speed of rotation the extension 148 has a greater tendency to attain the working position and to remain therein. The centrifugal force tending to hold the extension in the operative position may be varied by changing the distance 153 between the pivotal shaft 150 and the rotary axis 154. For this purpose the disc 147 has two through recesses 155 and 156 spaced apart from the rotary axis 154 by distances 157 and 158 which are smaller than the distance 153. The distance 158 is smaller than the distance 157 and, for example, less than two thirds of the distance 153. The distance 157 has a value lying approximately midway between those of the distances 153 and 158. The effect of the centrifugal force can be adapted, for example, for different speeds of the rotation of the agitator and hence of a distribution member, by arranging the pivotal shaft 149 in one of the recesses 150, 155 or 156, as the case may be.

The mode of operation of the agitator 145 otherwise corresponds with that of the agitator 45. The agitator 145 may also have two extensions 151 like the extensions 50 and 51 of the agitator 45. It will be obvious that in the case of two extensions two or more recesses like the recesses 150, 155 and 156 may be provided for each extension in the disc for the pivotal shaft 149 concerned.

In the same manner as illustrated in Fig. 8 the extension 151 can co-operate with a spring structure which exerts such a force on the extension that it tends to hold the extension in the operative position shown in Figs. 16 and 17. For example, the shaft 149 may be surrounded by a spring like the spring 60 in Fig. 8.

In the case of the agitators 45 and 145 shown in Figs. 6, 7 and 16, 17 respectively, the extensions may get loose from the carrier concerned because the respective pivotal shafts of the extensions can freely move downwards out of the bearing holes of the pivotal shafts.

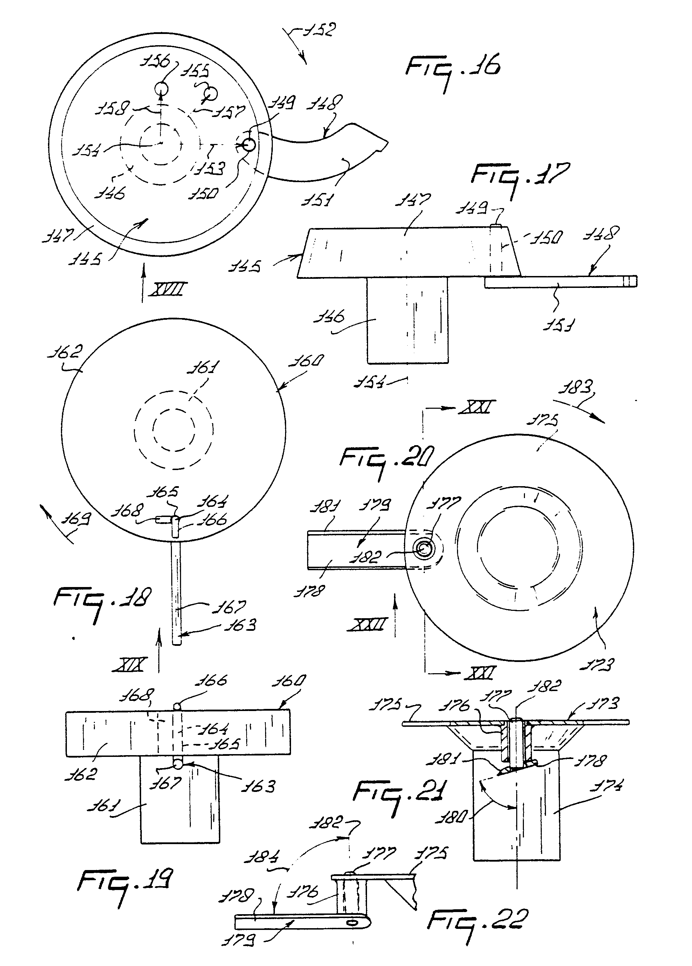

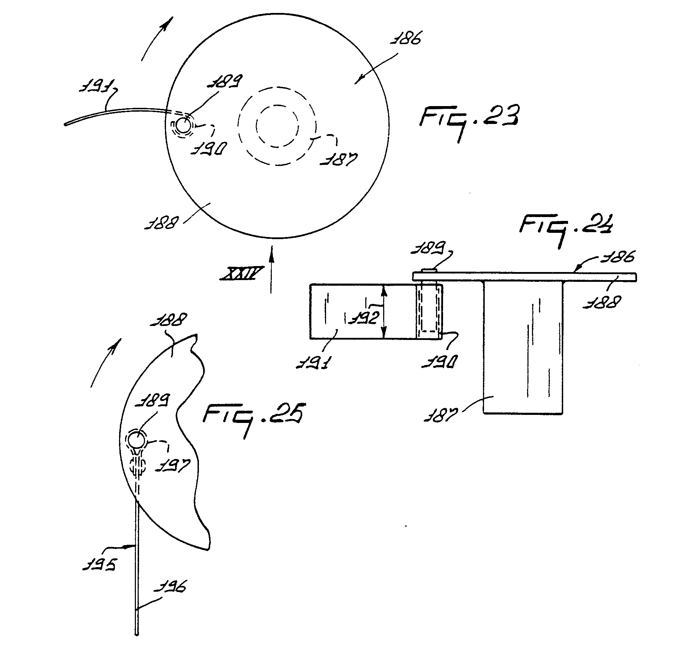

Figs. 18 and 19 show an embodiment in which an extension is arranged on the carrier so as to be freely rotatable, whereas the pivotal shaft of the extension is guarded against a vertical movement and hence against escape from the recess.

Figs. 18 and 19 show an agitator 160 having a hub 161 and a disc 162 like the agitators 45 and 145. On the disc 162 is movably arranged an extension 163, which can be compared with the extensions 50 and 51. The extension 163 has a vertical pivotal shaft 164 located in a bore 165. On the top side of the part of the extension forming the pivotal shaft 164 is provided a guard tag 166, which extends away from the pivotal shaft in the same direction as the agitator arm portion 167. The tag 166 has a slightly smaller sectional area than the shaft 164 and it co-operates with an elongate hole 168 adjoining the bore 165 and extending along the whole length of the bore 165;

it is narrower than the bore 165. The width of the recess 168 is such that the tag 166 can move through it. The extension 163 can thus be arranged so that the shaft 164 and the tag 166 are located in front of the bore 165 and the elongate hole 168 respectively, whilst the extension 163 can be fitted to the disc 162 from the underside. After the shaft 164 is arranged in the bore 165 in a manner such that the tag 166 is located above the top side of the disc 162, the extension 163 can be turned so that the tag 166 will lie at the side of the recess 168 on the top side of the disc 162. In this manner the tag 166 and the elongate hole 168 operate like a kind of bayonet joint to enable quick fastening and removal of the extension 163 from the disc 162. The normal direction of rotation of the agitator 160 is indicated by the arrow 169. The elongate hole 168 extends forwardly away from the bore 165 with respect to the direction of rotation 169. During operation, at the encounter of resistance in the material in the hopper, the agitator arm 167 will turn with the shaft 164 in a manner such that it moves to the rear against the direction of rotation 169 so that the tag 166 remains beyond the elongate hole 168. The operation of the extension 163 is identical to that of the extensions 50 and 151 so that reference may be made to the preceding embodiments.

The bayonet joint of the extension 163 on the carrier can be used in the same manner as that of the extensions in the preceding embodiments.

Figs. 20, 21 and 22 show an embodiment of an agitator 173 having a hub 174 and a dished disc 175. To the underside of the disc 175 is fastened a bearing sleeve 176 in which a pivotal shaft 177 of an extension 179 is pivotally arranged. The extension 179 comprises an agitator arm 178 in the form of a strip fastened to the lower side of the pivotal shaft 177. Viewed in the direction of length of the agitator arm 178, it is an angle 180 of about 75° to the centre line 182 of the pivotal shaft 177. The leading edge of the agitator arm 178, viewed with respect to the normal direction of rotation 183, is provided with an inclined, knife edge 181.

The operation of the agitator 173 corresponds with the operation described for the agitators 45 and 145.

In the construction shown in Figs. 20 to 22 the downwardly inclined, strip-shaped agitator arm 178 can perform a satisfactory scraping operation along the bottom. In particular the knife-like rim 181 is very effective in loosening material sticking to the bottom. The arm 178 of this agitator can turn to the rear at the encounter of too high a resistance so that it gets below the disc 175. Owing to an amount of clearance of the pivotal shaft 177 in the bore of the bearing sleeve 176 the agitator arm 178 can extend slightly downwardly from the shaft. This sloping position can also be attained because the agitator arm 178 is forwardly inclined and the material exerts a force on the agitator arm, which has at least one downwardly directed component, during the movement across the material. The result may be that the end of the agitator arm 178 touches the bottom and will bear thereon during its movement. Due to this sloping position the effect of the agitator arm may be adversely affected, whilst furthermore the bottom and the agitator arm are undesirably subjected to wear. In order to avoid this phenomenon the shaft 177 may be arranged in a slightly inclined position with respect to the length of the agitator arm 178 in a manner such that from its connection with the agitator arm the shaft 177 is upwardly inclined at an angle of about 2° and is at an angle 184 of 88° to the length of the agitator arm 178. Thus, when the bearing sleeve 176 is parallel to the hub 174, the agitator arm 178, when mounted on the bearing sleeve 176, will be slightly inclined upwards in the direction away from the sleeve. The agitator arm 178 is then urged into a horizontal position during its movement across the material, whilst the clearance of the shaft 177 in the bearing sleeve 176 is displaced to one side of the shaft 177. As a result the agitator arm 178 will be parallel to the bottom 177 during operation and will satisfactorily perform its function. It will be obvious that as an alternative the bearing sleeve may be arranged in a slightly inclined position. This construction may also be employed in the other corresponding embodiments, for example, as shown in Figs. 6 and 7 or Figs. 21, 23 and 24.

Figs. 23 and 24 show a different embodiment of an agitator. In this embodiment the agitator 186 comprises a hub 187 and a disc 188. On the underside the disc 188 has rigidly fastened to it a shaft 189, about which the bent-over end 190 of an extension 191 is rotatably arranged. In this embodiment the extension 191 can be slipped from below onto the shaft 189 by its curved part 190.

The operation of the extension 191 corresponds with that described above for the preceding embodiments. In this agitator — as in the embodiments of Figs. 18 and 21 — the extension will move into its operative position solely by the action of centrifugal force as shown in the Figures. The height 192 of the agitator arm 191 will experience a high resistance in the material so that in this embodiment the extension can get only with difficulty into the operative position shown and will soon turn into the rest position below the disc 188.

Fig. 25 shows part of the disc 188 in accordance with the construction of the preceding embodiment. In this embodiment the shaft 189 is surrounded by an extension 195 comprising an agitator arm 196, for example, of resilient material clamped tight between a bracket-shaped member 197, which is rotatable around the shaft 189. The form of the bracket 197 and the material from which it is made may be such that the extension 195 can readily turn about the shaft 189. The agitator arm 196 of resilient material can readily deflect resiliently from hard lumps in the material. The agitator arm can move past such lumps or clogging material in the hopper in a manner such that it has a satisfactory stirring effect in loosening the lumps or the clogging material. Also in this embodiment the extension 195 can turn, when experiencing a given resistance in the material, with respect to the carrier formed by the disc 188 and the hub 187 into the rest position below the disc 188.

## Claims

1. A device for spreading granular and/or powdery material comprising a hopper (2) for said material, said hopper having a bottom (7, 79) provided with at least one outlet port (8, 9; 76) for delivering the material to at least one distribution member (5, 6) placed underneath said hopper, driving means for driving said distribution member(s) so as to spread said material and an agitator (15, 45, 67, 85, 126, 145, 160, 173, 186) also driven by said driving means, said agitator being located in the hopper near the outlet port (8, 9; 76) and comprising a drivable carrier (16, 46, 68) provided with a disc-shaped member (21, 47, 68, 87, 128, 147, 162, 175, 188) situated in the hopper above the bottom and near the outlet port, an extension (17, 50, 51, 70, 91, 132, 148, 163, 179, 191, 195) movably coupled and mounted to said carrier so as to be swingable relative thereto between an operative position, in which said extension extends from the disc-shaped member outwardly substantially parallel to the bottom (7, 79) so as to pass above the outlet port during its driving by said driving means, and a rest position in which said extension lies, also parallel to said bottom (7, 79), but within or near the circumference of said disc-shaped member, the arrangement being such that when said carrier and said agitator are driven by said driving means there is a tendency, aided by the centrifugal force, to hold said extension in the operative position against the weight of the material, whilst when the resistance from the material in the hopper due to its weight exceeds the centrifugal force, it can be moved out of the operative position into its rest position, characterized in that said extension is mounted to said carrier so as to be located at a lower level than the top side of said disc-shaped member, whereby said extension lies in its rest position, at least nearly against the circumference of the outer periphery of said disc-shaped member or at least nearly completely below the underside of said disc-shaped member and in its operative position lies above the bottom (7, 79) so as to sweep along the bottom, so that the material is prevented from staying at the side of the outlet ports (8, 9; 76) on the bottom (7).

2. A device as claimed in claim 1, characterized in that the extension is connected with the carrier at a distance (153, 157, 158) from the axis of rotation (154) of the carrier, which distance is adjustable.

3. A device as claimed in claim 1 or 2, characterized in that the extension (50, 70, 148, 163, 179, 191, 195) is pivotable about a pivotal axis (53, 149, 164, 182, 189) with respect to the carrier (46, 68, 147, 175, 188), which pivotal axis is at least nearly parallel to the axis of rotation (30, 154, 182) of the carrier.

4. A device as claimed in any one of the preceding claims, characterized in that the extension (17, 50, 105, 132) is resiliently movable with respect to the carrier.

5. A device as claimed in claim 4, characterized in that the extension (17, 105, 132) is made from resilient material.

6. A device as claimed in any one of the preceding claims, characterized in that the extension (105 resp. 132) is fastened by means of a clamping member (92 resp. 131) to the carrier, whereby the periphery of the carrier has a recess (130) receiving part of the extension and/or the clamping member, whereby the clamping member is located at least mainly inside an imaginary circle around the rotary axis (93) of the carrier, said circle going through at least part of the circumference of the carrier.

7. A device as claimed in any one of the preceding claims, characterized in that in the fully operative position the part (29) of the extension (17, 105, 132) protruding beyond the circumference of the disc-shaped member (21, 90, 128) is at least substantially tangential to said circumference.

8. A device as claimed in any one of the preceding claims, characterized in that the extension (132) is designed and/or fastened to the carrier (128) in a manner such that it can be coupled with the carrier in two positions adapted to opposite directions of rotation of the carrier.

9. A device as claimed in any one of the preceding claims, characterized in that the extension (179) comprises an agitator arm (178) in the form of a strip which slopes forwardly and downwardly with respect to the normal direction of rotation (183) of the agitator (173).

10. A device as claimed in claim 9, characterized in that the strip is rigidly secured to a pivotal shaft (177) which is at an acute angle (180) to the broad sides of the strip-shaped agitator arm, viewed in the lengthwise direction of the agitator arm.

11. A device as claimed in claim 9 or 10, characterized in that the agitator arm extends away from the pivotal shaft (177) at an angle (184) smaller than 90°.

12. A device as claimed in any one of the preceding claims, characterized in that the extension (50, 134) is connected with a resilient member (60, 135) which exerts such forces on the extension that it tends to hold the extension in the operative position.

13. A device as claimed in any one of the preceding claims, characterized in that the extension is a flexible member (70) arranged on the carrier (67) below the disc-shaped member (68) of the latter.

14. A device as claimed in any one of the preceding claims, characterized in that the outlet port (76) extends at least partly in an upwardly directed wall (77) of the delivery part of the hopper, whereby the extension (17) extends to at least near the said upwardly directed wall (77).

## Patentansprüche

1. Vorrichtung zum Ausstreuen von körnigem und/oder pulverigem Gut, mit einem Vorratsbehälter (2) für das Gut, der einen Boden (7, 79) mit mindestens einem Auslaß (8, 9; 76) aufweist, der das Streugut mindestens einem unter dem Vorratsbehälter angeordneten Verteiler (5, 6) zuführt, mit Antriebsmitteln zum Antrieb des Verteilers zum Ausstreuen des Gutes und mit einem Rührwerk (15, 45, 67, 85, 126, 145, 160, 173, 186), das ebenfalls von den Antriebsmitteln angetrieben wird und in dem Vorratsbehälter in der Nähe des Auslasses (8, 9; 76) angeordnet ist sowie einen antreibbaren Träger (16, 46, 68) mit einer Scheibe (21, 47, 68, 87, 128, 147, 162, 175, 188) aufweist, wobei die Scheibe in dem Vorratsbehälter über dem Boden in der Nähe des Auslasses angeordnet ist, mit einem Ansatz (17, 50, 51, 70, 91, 132, 148, 163, 179, 191, 195), der beweglich mit dem Träger gekuppelt und auf ihm derart angebracht ist, daß er relativ zu ihm innerhalb einer Arbeitsstellung schwenkbar ist, in der der Ansatz sich von der Scheibe nach außen im wesentlichen parallel zu dem Boden (7, 79) erstreckt, so daß er während des Antriebs durch die Antriebsmittel den Bereich über dem Auslaß passiert, und in Ruhelage der Ansatz ebenfalls parallel zu dem Boden (7, 79), aber innerhalb oder in der Nähe des Umfangs der Scheibe liegt, wobei die Anordnung derart ist, daß beim Antrieb des Trägers und des Rührwerks durch die Antriebsmittel die Zentrifugalkraft den Ansatz gegen das Gewicht des Streugutes in der Arbeitslage zu halten sucht, während in dem Fall, in dem der Widerstand des Gutes in dem Vorratsbehälter gewichtsbedingt die Zentrifugalkraft überschreitet, der Ansatz von der Arbeitslage in seine Ruhelage geführt wird, dadurch gekennzeichnet, daß der Ansatz auf dem Träger derart befestigt ist, daß er tiefer liegt als die Oberseite der Schiebe, wobei der Ansatz in seiner Ruhelage zumindest in der Nähe des Umfangs der äußeren Peripherie der Scheibe oder vollständig unterhalb der Unterseite der Scheibe und in seiner Arbeitslage oberhalb des Bodens (7, 79) liegt, derart, daß er am Boden entlang streicht, so daß sich das Gut nicht an der Seite der Auslässe (8, 9; 76) auf dem Boden (7) festsetzen kann.

2. Vorrichtung nach Anspruch 1, dadurch gekennzeichnet, daß der Ansatz mit dem Träger in einem veränderbaren Abstand (153, 157, 158) von der Drehachse (154) des Trägers verbunden ist.

3. Vorrichtung nach Anspruch 1 oder 2, dadurch gekennzeichnet, daß der Ansatz (50, 70, 148, 163, 179, 191, 195) um eine Schwenkachse (53, 149, 164, 182, 189) in bezug auf den Träger (46, 68, 147, 175, 188) schwenkbar ist, wobei die Schwenkachse zumindest etwa parallel zu der Drehachse (30, 154, 182) des Trägers liegt.

4. Vorrichtung nach einem der vorhergehenden Ansprüche, dadurch gekennzeichnet, daß der Ansatz (17, 50, 105, 132) in bezug auf den Träger federnd beweglich ist.

5. Vorrichtung nach Anspruch 4, dadurch gekennzeichnet, daß der Ansatz (17, 105, 132) aus federndem Werkstoff besteht.

6. Vorrichtung nach einem der vorhergehenden Ansprüche, dadurch gekennzeichnet, daß der Ansatz (105 bzw. 132) mit einer Klemme (92 bzw. 131) an dem Träger befestigt ist, wobei die Peripherie des Trägers eine Ausnehmung (130) zur Aufnahme eines Teiles des Ansatzes und/oder der Klemme aufweist, wobei die Klemme zumindest überwiegend innerhalb eines gedachten, die Drehachse (93) des Trägers umgebenden Kreises angeordnet ist, der zumindest einen Teil des Umfanges des Trägers schneidet.

7. Vorrichtung nach einem der vorhergehenden Ansprüche, dadurch gekennzeichnet, daß in der Arbeitslage das Teil (29) des Ansatzes (17, 105, 132), das aus dem Umfang der Scheibe (21, 90, 129) herausragt, zumindest im wesentlichen tangential zu dem Umfang liegt.

8. Vorrichtung nach einem der vorhergehenden Ansprüche, dadurch gekennzeichnet, daß der Ansatz (132) derart auf dem Träger (182) angeordnet und/oder befestigt ist, daß er mit dem Träger in zwei Lagen verbunden werden kann, die zwei entgegengesetzten Drehrichtungen des Trägers entsprechen.

9. Vorrichtung nach einem der vorhergehenden Ansprüche, dadurch gekennzeichnet, daß der Ansatz (179) einen streifenförmigen Rührwerksarm (178) aufweist, der sich in bezug auf die normale Drehrichtung (183) des Rührwerks (173) nach vorne und unten erstreckt.

10. Vorrichtung nach Anspruch 9, dadurch gekennzeichnet, daß das streifenförmige Teil starr mit einer Schwenkachse (177) verbunden ist, die — in Längsrichtung des Rührwerksarmes gesehen — in einem spitzen Winkel (180) zu den Breitseiten des streifenförmigen Rührwerksarmes angeordnet ist.

11. Vorrichtung nach Anspruch 9 oder 10, dadurch gekennzeichnet, daß sich der Rührwerksarm von der Schwenkachse (177) aus in einem Winkel (184), der kleiner als 90° ist, erstreckt.

12. Vorrichtung nach einem der vorhergehenden Ansprüche, dadurch gekennzeichnet, daß der Ansatz (50, 134) mit einem federnden Element (60, 135) belastet ist, das den Ansatz in der Arbeitslage zu halten sucht.

13. Vorrichtung nach einem der vorhergehenden Ansprüche, dadurch gekennzeichnet, daß der Ansatz ein flexibles Element (70) ist, das auf dem Träger (67) unterhalb der Scheibe (68) angeordnet ist.

14. Vorrichtung nach einem der vorhergehenden Ansprüche, dadurch gekennzeichnet, daß sich der Auslaß (76) zumindest teilweise in einer aufwärts gerichteten Wandung (77) des Auslaßteiles des Vorratsbehälters erstreckt, wobei sich der Ansatz (17) zumindest bis in die Nähe der aufwärts gerichteten Wandung (77) erstreckt.

## Revendications

1. Dispositif pour épandre une matière granuleuse et/ou pulvérulente, comprenant une trémie (2) pour cette matière, ladite trémie ayant un fond (7, 79) pourvu d'au moins un orifice de sortie (8, 9; 76) pour débiter la matière à au moins un organe de distribution (5, 6) placé sous ladite trémie, des moyens d'entraînement pour entraîner ledit ou lesdits organes de distribution de manière à épandre ladite matière et un agitateur (15, 45, 67, 85, 126, 145, 160, 173, 186) également entraîné par lesdits moyens d'entraînement, ledit agitateur étant situé dans la trémie près de l'orifice de sortie (8, 9; 76) et comprenant un organe porteur (16, 46, 68) susceptible d'être entraîné pourvu d'un organe en forme de disque (21, 47, 68, 87, 128, 147, 162, 175, 188) situé dans la trémie au dessus du fond et près de l'orifice de sortie, une extension (17, 50, 51, 70, 91, 132, 148, 163, 179, 191, 195) accouplée de manière mobile audit organe porteur et montée sur cet organe de manière à pouvoir basculer par rapport à cet organe entre une position active où ladite extension s'étend à partir de l'organe en forme de disque vers l'extérieur, de manière sensiblement parallèle au fond (7, 79) de manière à passer au dessus de l'orifice de sortie pendant qu'elle est entraînée par les dits moyens d'entraînement, et une position de repos dans laquelle ladite extension s'étend aussi parallèlement audit fond (7, 79), mais à l'intérieur ou près de la circonférence dudit organe en forme de disque, l'agencement étant tel que lorsque ledit organe porteur et ledit agitateur sont entraînés par lesdits moyens d'entraînement il y a une tendance, aidée par la force centrifuge à maintenir ladite extension en position active en s'opposant au poids de la matière, tandis que, quand la résistance de la matière dans la trémie, due à son poids, excède la force centrifuge, elle peut être mue hors de la position active et amenée en sa position de repos, caractérisé en ce que ladite extension est montée sur ledit organe porteur de manière à être située à un niveau plus bas que le côté supérieur dudit organe en forme de disque, ceci ayant pour effet que ladite extension repose en sa position de repos, au moins presque contre la circonférence de la périphérie externe dudit organe en forme de disque ou bien complètement sous le côté le plus bas dudit organe en forme de disque, et que dans sa position active elle se trouve au dessus du fond (7, 79) de manière à balayer le long du fond, de telle sorte que la matière est empêchée de rester sur le côté des orifices de sortie (8, 9; 76) sur le fond (7).

2. Dispositif tel que revendiqué dans la revendication 1, caractérisé en ce que l'extension est reliée à l'organe porteur à une certaine distance (153, 157, 158) de l'axe de rotation (154) de l'organe porteur, laquelle distance est réglable.

3. Dispositif tel que revendiqué dans la revendication 1 ou 2, caractérisé en ce que l'extension (60, 70, 148, 163, 179, 191, 195) est susceptible de pivoter autour d'un axe de rotation (53, 149, 164, 182, 189) par rapport à l'organe porteur (46, 68, 147, 175, 188), lequel axe de rotation est tout au moins presque parallèle à l'axe de rotation (30, 154, 182) de l'organe porteur.

4. Dispositif tel que revendiqué dans l'une quelconque des revendications précédentes, caractérisé en ce que l'extension (17, 50, 105, 132) est mobile élastiquement par rapport à l'organe porteur.

5. Dispositif tel que revendiqué dans la revendication 4, caractérisé en ce que l'extension (17, 105, 132) est faite d'un matériau élastique.

6. Dispositif tel que revendiqué dans l'une quelconque des revendicatons précédentes, caractérisé en ce que l'extension (105 resp. 132) est attachée à l'organe porteur au moyen d'un organe de pincement (92 resp. 131), la périphérie de l'organe porteur ayant une cavité (130) recevant une partie de l'extension et/ou l'organe de pincement, l'organe de pincement étant situé tout au moins principalement à l'intérieur d'un cercle imaginaire autour de l'axe de rotation (93) de l'organe porteur, ledit cercle passant par au moins une partie de la circonférence de l'organe porteur.

7. Dispositif tel que revendiqué dans l'une quelconque des revendications précédentes, caractérisé en ce qu'en position complétement active la partie (29) de l'extension (17, 105, 132) dépassant au delà de la circonférence de l'organe en forme de disque (21, 90, 128) est au moins sensiblement tangente à ladite circonférence.

8. Dispositif tel que revendiqué dans l'une quelconque des revendications précédentes, caractérisé en ce que l'extension (132) est conçue et/ou attachée à l'organe porteur (128) de telle manière qu'elle puisse être accouplée à l'organe porteur en deux positions adaptées à des sens de rotation opposés de l'organe porteur.

9. Dispositif tel que revendiqué dans l'une quelconque des revendications précédentes, caractérisé en ce que l'extension (179) comporte un bras agitateur (178) en forme de languette qui s'étend en pente vers l'avant et vers le bas par rapport au sens normal de rotation (183) de l'agitateur (173).

10. Dispositif tel que revendiqué dans la revendication 9, caractérisé en ce que la languette est rigidement attachée à un arbre de rotation (177) qui est à angle aigu (180) par rapport aux côtés larges du bras agitateur en forme de languette, vus dans le sens longitudinal du bras agitateur.

11. Dispositif tel que revendiqué dans la revendication 9 ou 10, caractérisé en ce que le bras agitateur s'étend en s'éloignant de l'arbre de rotation (177) sous un angle (184) plus petit que 90°.

12. Dispositif tel que revendiqué dans l'une quelconque des revendications précédentes, caractérisé en ce que l'extension (50, 134) est reliée à un organe élastique (60, 135) qui exerce sur l'extension des forces telles qu'il tend à maintenir l'extension en position active.

13. Dispositif tel que revendiqué dans l'une quelconque des revendications précédentes, caractérisé en ce que l'extension est un organe flexible (70) disposé sur l'organe porteur (67) sous l'organe en forme de disque (68) de ce dernier.

14. Dispositif tel que revendiqué dans l'une quelconque des revendications précédentes, caractérisé en ce que l'orifice de sortie (76) s'étend au moins partiellement dans une paroi (77) dirigée vers le haut de la partie distributrice de la trémie, l'extension (17) s'étendant tout au moins jusqu'à proximité de ladite paroi (77) dirigée vers le haut.

0 078 585

FIG.1

FIG.2

FIG.3

FIG.4

FIG.5

1

0 078 585

FIG.6

FIG.7

FIG.8

FIG.9

FIG.10

2

FIG. 11

FIG. 12

FIG. 13

FIG. 14

FIG. 15

3

FIG.16

FIG.17

FIG.18

FIG.19

FIG.20

FIG.21

FIG.22

4

FIG.23

FIG.24

FIG.25